# EUROPEAN PATENT APPLICATION

(11) **EP 4 786 967 A1**
(43) Date of publication of application: **05.08.2026**
(21) Application number: 24871841.3
(22) Date of filing: 10.09.2024
(51) Int. Cl.: G01N 27/12, G01N 27/04, G01N 27/16

(54) **GAS FILTER, GAS SENSOR, AND GAS DETECTION DEVICE**

(30) Priority: 27.09.2023 JP 2023166540
(71) Applicant: PANASONIC INTELLECTUAL PROPERTY MANAGEMENT CO., LTD., Kadoma-shi, Osaka 571-0057 (JP)
(72) Inventor: OHTANI, Yuya, Kadoma-shi, Osaka 571-0057 (JP); SHIGENO, Hiroki, Kadoma-shi, Osaka 571-0057 (JP); UEDA, Takeshi, Kadoma-shi, Osaka 571-0057 (JP)
(74) Representative: Müller-Boré & Partner Patentanwälte PartG mbB
(86) International application number: PCT/JP2024/032427
(87) International publication number: WO 2025/070044

(57) **Abstract**

The problem to be overcome by the present disclosure is to provide a gas filter which may efficiently block the passage of water vapor. A gas filter 1 according to an aspect of the present disclosure includes a porous membrane 2. The porous membrane 2 has a pore diameter equal to or smaller than 2 nm. The porous membrane 2 contains a polysiloxane compound having a fluoroalkyl group.

## Description

### Technical Field

The present disclosure generally relates to a gas filter, a gas sensor and a gas detection device, and more particularly relates to a gas filter which may be provided for a gas sensor, a gas sensor including the gas filter, and a gas detection device including the gas sensor.

### Background Art

Patent Literature 1 discloses a gas separation filter including: a porous supporting layer; an intermediate layer formed on the porous supporting layer which has a smaller pore diameter than the porous supporting layer; and a separating layer formed on the intermediate layer which has a smaller pore diameter than the intermediate layer. The gas separation filter is used to separate a predetermined gas from a mixed gas. The intermediate layer of the gas separation filter is a porous body having a hydrophobic group.

### Citation List

### Patent Literature

Patent Literature 1: JP 2016-221453 A

### Summary of Invention

The problem to be overcome by the present disclosure is to provide a gas filter which may efficiently block the passage of water vapor, a gas sensor including the gas filter, and a gas detection device including the gas sensor.

A gas filter according to an aspect of the present disclosure includes a porous membrane. The porous membrane has a pore diameter equal to or smaller than 2 nm. The porous membrane contains a polysiloxane compound having a fluoroalkyl group.

A gas sensor according to another aspect of the present disclosure includes: a gas sensing unit which causes a change in response to components in a gas; and the gas filter described above, through which the gas supplied to the gas sensing unit passes.

A gas detection device according to still another aspect of the present disclosure includes: the gas sensor described above; and a detection unit which generates a detection result of the gas in response to the change caused in the gas sensing unit of the gas sensor.

### Brief Description of Drawings

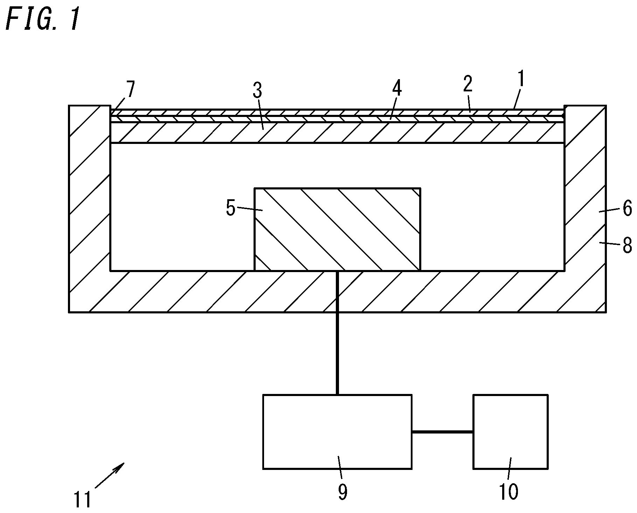

[FIG. 1] FIG. 1 illustrates schematic configurations for a gas filter, gas sensor, and gas detection device according to an embodiment.

### Description of Embodiments

An embodiment of the present disclosure will now be described with reference to FIG. 1. Note that the embodiment to be described below is only an exemplary one of various embodiments of the present disclosure and should not be construed as limiting. Rather, the exemplary embodiment may be readily modified in various manners depending on a design choice or any other factor without departing from the scope of the present disclosure. The drawings to be referred to in the following description of embodiments are all schematic representations. Thus, the ratio of the dimensions (including thicknesses) of respective constituent elements illustrated on the drawings does not always reflect their actual dimensional ratio. Also, the mechanism of action to be described below in the following description of embodiments is nothing but a presumed one. Thus, the following description of the mechanism of action should not be construed as limiting the scope of the present disclosure.

A gas filter 1 according to an embodiment includes a porous membrane 2. The porous membrane has a pore diameter equal to or less than 2 nm. The porous membrane 2 contains a polysiloxane compound having a fluoroalkyl group.

The gas filter 1 according to this embodiment may efficiently block the permeation of water vapor. This is presumably because the polysiloxane compound having the fluoroalkyl group provides the porous membrane 2 with water repellency. In addition, this should also be because the porous membrane 2 having as small a pore diameter as 2 nm or less would significantly reduce the penetration of water vapor into pores of the porous membrane 2.

In some cases, the passage of water vapor cannot be reduced sufficiently simply by providing the gas filter 1 with hydrophobicity. On the other hand, according to this embodiment, the polysiloxane compound having the fluoroalkyl group imparts excellent hydrophobicity to the inner surface of pores in the gas filter 1 and the diameter of the pores is set at 2 nm or less. The present inventors believe that this should contribute to effectively blocking the penetration of water vapor into the pores as described above.

In addition, the gas filter 1 may selectively block the permeation of water vapor, in particular, which may prevent the circulation of various types of gases other than water vapor, such as carbon monoxide gas, from being blocked excessively. Therefore, this allows, when the gas filter 1 is applied to a gas sensor 8, for example, the gas to be detected to circulate with reliability while reducing the circulation of water vapor.

The gas filter 1 may include only the porous membrane 2. Alternatively, the gas filter 1 may include not only the porous membrane 2 but also one or more additional layers other than the porous membrane 2. In that case, the porous membrane 2 and the additional layer(s) may be stacked one on top of another. The additional layer other than the porous membrane 2 may include, for example, a porous substrate 3 to be described later, or may include the porous substrate 3 and a porous intermediate layer 4.

A more specific configuration for the gas filter 1 according to this embodiment will be described.

As described above, the gas filter 1 may include the porous substrate 3, and the porous substrate 3 may be stacked on the porous membrane 2. In that case, the porous membrane 2 may be supported by the porous substrate 3. Examples of materials for the porous substrate 3 include porous ceramics, porous glass, and porous resins. As used herein, if the porous substrate 3 and the porous membrane 2 are stacked one on top of another, this expression may mean that the porous substrate 3 and the porous membrane 2 are stacked directly in contact with each other. Alternatively, this expression may also mean that the porous substrate 3 and the porous membrane 2 are stacked with still another layer (such as an additional porous substrate 3) other than any one of the porous substrate 3 or the porous membrane 2 interposed between the porous substrate 3 and the porous membrane 2.

The pore diameter of the porous substrate 3 is preferably larger than the pore diameter of the porous membrane 2. In that case, the porous substrate 3 will not excessively block the permeation of a gas into the gas filter 1. The pore diameter of the porous substrate 3 may be equal to or larger than 1 nm and equal to or smaller than 100 nm, for example. The pore diameter is more preferably equal to or larger than 10 nm, and is even more preferably equal to or larger than 50 nm. Note that the pore diameter of the porous substrate 3 is an average pore diameter which is measured by the mercury intrusion technique.

The thickness of the porous substrate 3 is preferably set at an appropriate value so that the porous substrate 3 is strong enough to support the porous membrane 2, and will not excessively block the permeation of the gas through the gas filter 1. The thickness of the porous substrate 3 may be set at a value equal to or larger than 0.1 mm and equal to or smaller than 1 mm, for example.

If the gas filter 1 includes the porous substrate 3, the porous membrane 2 may be stacked directly on the porous substrate 3. Alternatively, an additional layer other than any one of the porous substrate 3 or the porous membrane 2 may also be interposed between the porous substrate 3 and the porous membrane 2. For example, as described above, the gas filter 1 may include the porous intermediate layer 4 interposed between the porous substrate 3 and the porous membrane 2. The porous intermediate layer 4 preferably has a pore diameter which is smaller than that of the porous substrate 3 and larger than that of the porous membrane 2. In that case, the pore diameters of the respective layers of the filter decrease in the order of the porous substrate 3, the porous intermediate layer 4, and the porous membrane 2. Therefore, even if there is a difference in pore diameter between the porous substrate 3 and the porous membrane 2, the resistance applied to a gas passing through the gas filter 1 may still be reduced.

If the thickness of the porous substrate 3 is increased to ensure sufficient strength in a situation where the porous membrane 2 is supported only by the porous substrate 3, the resistance applied to the gas passing through the gas filter 1 will increase. On the other hand, providing the porous intermediate layer 4 instead of increasing the thickness of the porous substrate 3 allows the porous membrane 2 to be supported firmly by the porous substrate 3 and the porous intermediate layer 4 while reducing an excessive increase in the resistance applied to the gas passing through the gas filter 1.

The porous intermediate layer 4 has a pore diameter equal to or larger than 4 nm and equal to or less than 100 nm, for example. Note that the pore diameter of the porous intermediate layer 4 is an average pore diameter which is measured by the mercury intrusion technique.

The thickness of the porous intermediate layer 4 is preferably set at an appropriate value so that the porous substrate 3 and the porous intermediate layer 4 have strength high enough to support the porous membrane 2 and that the porous intermediate layer 4 will not excessively block the permeation of the gas through the gas filter 1. The thickness of the porous intermediate layer 4 may be equal to or larger than 0.1 mm and equal to or smaller than 2 mm, for example. The total thickness of the porous substrate 3 and the porous intermediate layer 4 may be equal to or larger than 0.2 mm and equal to or smaller than 4 mm, for example.

Examples of materials for the porous intermediate layer 4 include porous ceramics, porous glass, and porous resins. The porous intermediate layer 4 may be made from a hydrolysis polycondensation product of a hydrolyzable silane compound. In that case, the porous intermediate layer 4 may be formed by the sol-gel method. Specifically, the porous intermediate layer 4 may be formed by, for example, applying a reactive solution containing a hydrolyzable silane compound, a catalyst, and water onto the surface of the porous substrate 3, and then heating the reactive solution to cause a hydrolysis and polycondensation reaction of the hydrolyzable silane compound. In that case, a porous intermediate layer 4 with a desired thickness may be formed by repeating the application and heating of the reactive solution multiple times.

As described above, the porous membrane 2 contains a polysiloxane compound having a fluoroalkyl group. The surface of the pores of the porous membrane 2 is preferably formed out of the polysiloxane compound having the fluoroalkyl group. Therefore, for example, the porous membrane 2 may be configured as a single layer formed out of the polysiloxane compound having the fluoroalkyl group. Alternatively, for example, the surface of the pores of the porous membrane 2 may be coated with a layer formed out of the polysiloxane compound having the fluoroalkyl group.

As described above, the porous membrane 2 contains the polysiloxane compound having the fluoroalkyl group. In addition, the pore diameter of the porous membrane 2 is equal to or less than 2 nm. Thus, the penetration of water vapor into the pores of the porous membrane 2 may be reduced. To reduce the penetration of water vapor into the pore more significantly, the pore diameter of the porous membrane 2 is more preferably equal to or less than 1 nm. The pore diameter of the porous membrane 2 is also preferably equal to or larger than 0.5 nm. In that case, the porous membrane 2 will not excessively block the circulation of the gas through the gas filter 1. Note that the pore diameter of the porous membrane 2 may be determined by the t-plot method of nitrogen adsorption measurement.

The polysiloxane compound having the fluoroalkyl group may be a hydrolysis polycondensation product of a hydrolyzable silane compound (A) which contains a hydrolyzable silane compound (a1) having a fluoroalkyl group, for example.

The fluoroalkyl group included in the hydrolyzable silane compound (a1) may be bonded to, for example, a silicon atom in the hydrolyzable silane compound (a1). The hydrolyzable silane compound (a1) may have, for example, one to nine fluoroalkyl groups in one molecule.

The hydrolyzable silane compound (a1) contains at least one selected from the group consisting of, for example, fluoroalkyltrimethoxysilane, fluoroalkyltriethoxysilane, fluoroalkylmethyldimethoxysilane, fluoroalkylmethyldiethoxysilane, bis (fluoroalkyl-diethoxysilyl) methane, 1,2-bis(fluoroalkyldiethoxysilyl) ethane, and 1,4-bis(fluoroalkyl-diethoxysilyl) benzene. However, these are only examples of compounds that the hydrolyzable silane compound (a1) may contain and should not be construed as limiting.

The fluoroalkyl group included in the hydrolyzable silane compound (a1) may have, for example, one to three carbon atoms. The fluoroalkyl group may also have, for example, three to nine fluorine atoms.

The hydrolyzable silane compound (A) may further contain a hydrolyzable silane compound (a2) which does not have any fluoroalkyl group. The hydrolyzable silane compound (a2) contains at least one selected from the group consisting of, for example, tetramethoxysilane, tetraethoxysilane, methyltrimethoxysilane, methyltriethoxysilane, bis(triethoxysilyl) methane, 1,2-bis(triethoxysilyl) ethane, and 1,4-bis(triethoxysilyl) benzene. However, these are only examples of compounds that the hydrolyzable silane compound (a2) may contain and should not be construed as limiting.

The proportion of the hydrolyzable silane compound (a1) to the hydrolyzable silane compound (A) is preferably equal to or greater than 2 mol%. This may more efficiently prevent water vapor from permeating through the gas filter 1. This is presumably because the hydrophobicity of the surface of the pores of the porous membrane 2 sufficiently increases in that case. This proportion is more preferably equal to or greater than 5 mol%. In addition, the proportion of the hydrolyzable silane compound (a1) to the hydrolyzable silane compound (A) is preferably equal to or less than 20 mol%. This may more efficiently prevent water vapor from permeating through the gas filter 1 as well. This is presumably because if the proportion of the hydrolyzable silane compound (a1) were equal to or less than 20 mol%, the variation in the diameter of the pores of the porous membrane 2 would be reduced, which would reduce the chances of water vapor passing through pores with relatively large diameters. This proportion is more preferably equal to or less than 10 mol%.

The porous membrane 2 may be formed by, for example, the sol-gel method. In that case, a reactive solution (sol) containing, for example, a hydrolyzable silane compound (A), water, a catalyst, and an organic solvent is prepared. The organic solvent is preferably an amphiphilic solvent which is compatible with both water and the hydrolyzable silane compound (A). The organic solvent may be, for example, a lower alcohol such as ethanol. The catalyst may be, for example, an appropriate acid catalyst or base catalyst. The acid catalyst may be, for example, hydrochloric acid, sulfuric acid, or nitric acid. However, these are only examples and should not be construed as limiting.

The reactive solution is applied onto, for example, the porous substrate 3 or the porous intermediate layer 4 and then heated. In that case, to reduce defects in the porous membrane 2, the reactive solution is preferably heated by applying the reactive solution after the porous substrate 3 has been heated. Heating the reactive solution in this manner promotes the hydrolysis polycondensation reaction of the hydrolyzable silane compound (A). In this manner, the porous membrane 2 may be formed out of a polysiloxane compound having a fluoroalkyl group. Repeating application and heating of the reactive solution multiple times may increase the thickness of the porous membrane 2, which allows a porous membrane 2 with a desired thickness to be formed.

Note that the sol-gel method is only an exemplary one of various methods for forming the porous membrane 2 and should not be construed as limiting. Alternatively, the porous membrane 2 may also be formed by the chemical vapor deposition method, for example.

The thickness of the porous membrane 2 is preferably equal to or less than 5 nm. This may reduce the chances of causing damage, such as cracks, to the porous membrane 2. The thickness of the porous membrane 2 is more preferably equal to or less than 2 nm. In addition, the thickness of the porous membrane 2 is preferably equal to or greater than 0.5 nm. In that case, the permeation of water vapor through the porous membrane 2 may be more significantly reduced. The thickness of the porous membrane 2 is more preferably equal to or greater than 1 nm.

The mass per area of the porous membrane 2 is also preferably equal to or less than 3 mg/cm². This may reduce the chances of causing damage, such as cracks, to the porous membrane 2. In addition, the mass per area of the porous membrane 2 is preferably equal to or greater than 0.5 mg/cm². In that case, the permeation of water vapor through the porous membrane 2 may be more significantly reduced.

The gas filter 1 according to this embodiment is suitable for use in a gas sensor 8. In that case, the gas filter 1 may effectively reduce the circulation of water vapor through the gas sensor 8. Therefore, for example, if a decline in the function of the gas sensor 8 is caused by water vapor, the gas filter 1 may reduce the inflow of the water vapor into the gas sensor 8. Alternatively, when a decline in the function of the gas sensor 8 is caused by drying, the gas filter 1 may reduce the outflow of water vapor from the gas sensor 8. In addition, the gas filter 1 may selectively reduce the circulation of water vapor, and therefore, may prevent the circulation of the gas to be detected from being interfered with excessively. Consequently, the gas filter 1 may reduce the chances of causing a decline in the sensitivity of the gas sensor 8.

Note that the gas filter 1 according to this embodiment may also be used for various other purposes in which its properties are utilizable effectively, not just in the gas sensor 8.

A gas sensor 8 including the gas filter 1 according to this embodiment, and a gas detection device 11 including the gas sensor 8 will be described.

The gas sensor 8 includes: a gas sensing unit 5 which causes a change in response to the components in a given gas; and the gas filter 1. The gas filter 1 is provided so that the gas supplied to the gas sensing unit 5 may pass through the gas filter 1.

The gas sensor 8 shown in FIG. 1 includes the gas sensing unit 5, a sensor chamber 6, a gas flow channel 7 and the gas filter 1. The gas sensing unit 5 is disposed in the sensor chamber 6. The gas flow channel 7 is a flow channel communicating with the sensor chamber 6 to allow the gas to be supplied to the sensor chamber 6 to pass therethrough. The gas filter 1 according to this embodiment is provided for the gas flow channel 7 and arranged so that a space inside the sensor chamber 6 is interposed between the gas sensing unit 5 and the gas filter 1. In other words, there is an interval between the gas filter 1 and the gas sensing unit 5.

In the gas sensor 8 according to this embodiment, the gas passes through the gas flow channel 7, permeates the gas filter 1, and then is supplied to the sensor chamber 6 to come into contact with the gas sensing unit 5.

In addition, a space inside the sensor chamber 6 is interposed between the gas sensing unit 5 and the gas filter 1. This reduces the chances of the gas being prevented from reaching the gas sensing unit 5 compared to a situation where the gas sensing unit 5 is directly covered with the gas filter 1. Therefore, this reduces the chances of the sensitivity of the gas sensing unit 5 being impaired by the gas filter 1.

The gas sensing unit 5 is, for example, an appropriate sensor element that causes, when exposed to an incoming gas, a change according to components included in the incoming gas. The change caused in the gas sensing unit 5 is, for example, a change in the physical properties (such as an electrical resistance value) of the gas sensing unit 5 or generation of electromotive force in the gas sensing unit 5.

The gas flow channel 7 may have any form without limitation, as long as the gas flow channel 7 communicates with the inside of the sensor chamber 6 and a gas may be supplied from the gas flow channel 7 into the sensor chamber 6. For example, the gas flow channel 7 may be a pipe connected to the sensor chamber 6, or an opening provided through the sensor chamber 6.

The inside of the sensor chamber 6 is preferably hermetically sealed entirely but its part communicating with the gas flow channel 7. The gas sensor 8 is preferably configured so that all the gas flowing through the gas flow channel 7 may permeate the gas filter 1 before flowing into the sensor chamber 6. For that purpose, the gas filter 1 is provided, for example, to block the gas flow channel 7. In other words, the gas filter 1 is provided to divide the gas flow channel 7 into an upstream side and a downstream side in the direction in which the gas circulates. In that case, particularly when the volume of the gas in the sensor chamber 6 decreases during the process in which the gas is being detected by the gas sensing unit 5, a pressure difference is caused between the inside and outside of the sensor chamber 6, which promotes the inflow of the gas into the inside of the sensor chamber 6 through the gas filter 1. This allows the gas to be detected more efficiently. The volume of the gas in the sensor chamber 6 decreases during the process in which the gas is being detected by the gas sensing unit 5, for example, when the gas sensing unit 5 is a contact combustion sensor element for detecting carbon monoxide. In that case, two molecules of carbon monoxide react with one molecule of oxygen to generate two molecules of carbon dioxide, thus causing a decrease in the volume of the gas. When the gas sensing unit 5 is a semiconductor sensor element or an electrochemical sensor element, the volume of the gas may also be decreased by chemical reaction, which may promote the inflow of the gas.

In this embodiment, the gas sensing unit 5 is, for example, a semiconductor sensor element, a contact combustion sensor element, or an electrochemical sensor element.

In particular, when the gas sensing unit 5 is an electrochemical sensor element, the durability of the gas sensing unit 5 may be increased. The electrochemical sensor element produces an electrochemical reaction mediated by water to generate electromotive force according to the type of molecules to be detected in the gas. Therefore, when the electrochemical sensor element dries in a dry atmosphere to cause shortage of water in the electrochemical sensor element, the sensitivity of the electrochemical sensor element will decrease. In addition, it is known that when dried, the electrochemical sensor element comes to have a decreased degree of ionic conductivity, which is also a factor causing a decrease in the sensitivity. According to this embodiment, however, the passage of water vapor through the gas filter 1 is reduced, so that the outflow of the water from the electrochemical sensor element, serving as the gas sensing unit 5, is reduced. Therefore, even in a dry atmosphere, the gas sensing unit 5 may also have a sufficient degree of durability. In addition, in this embodiment, the durability of the gas sensor 8 in a dry atmosphere may be increased even with no water reservoir provided. Therefore, the gas sensor 8 may have a reduced size.

Note the structure of the gas sensor 8 described above is only an example and should not be construed as limiting. For example, there may be no space left between the gas filter 1 and the gas sensing unit 5 so that the gas sensing unit 5 may be directly covered with the gas filter 1.

A gas detection device 11 according to an embodiment includes the gas sensor 8 according to this embodiment; and a detection unit 9 that generates a detection result in response to a change caused in the gas sensing unit 5 of the gas sensor 8. The detection unit 9 is a detection circuit that generates, as a detection result, the type of a component to be measured in a given gas based on, for example, the change caused in the gas sensing unit 5, or further generates, as a detection result, the concentration of the component contained in the gas. The gas detection device 11 may include an alert unit 10 that makes notification of the detection result generated by the detection unit 9 in the form of sound or video, for example. The alert unit 10 may be, for example, a loudspeaker, a buzzer, a display, or a lamp. The gas detection device 11 may be configured as, for example, a gas alarm device.

### Examples

Next, specific examples of the exemplary embodiment will be presented. Note that the examples to be described below are only examples and should not be construed as limiting the scope of the present disclosure.

### 1. Formation of Porous Membrane and Gas Filter

A reactive solution was prepared by mixing a hydrolyzable silane compound, an aqueous solution of hydrochloric acid with a concentration of 1 mol/L, ion-exchanged water, and ethanol as shown in Table 1. The amounts of respective materials used are as shown in Table 1. The proportion of the hydrolyzable silane compound shown in Table 1 (unit: mol%) is the proportion of the hydrolyzable silane compound to the entire reactive solution.

A porous glass plate (with a pore diameter of 50 nm) having dimensions of 2 cm × 2 cm × 1 mm was provided as a porous substrate.

The porous substrate was heated in a dryer for 1 hour and then placed on a hot plate at 180°C. In this state, the reactive solution was applied by spraying onto the porous substrate to form a coating film. The coating film was then heated in a dryer at 180°C for 3 minutes. The application of the reactive solution and heating of the coating film were repeated ten times. Next, the coating film was heated in a dryer at 180°C for 1 hour. In this manner, a gas filter was formed which included the porous substrate and a porous membrane stacked on the porous substrate.

The mass (adhesion amount) per area of the porous membrane, which was calculated based on the volume of the reactive solution applied to the porous substrate, is shown in Table 1.

### 2. Measurement of Water Contact Angle

The water contact angle (static contact angle) of the porous membrane was measured using a contact angle meter (product name: Drop Master) manufactured by Kyowa Interface Science Co., Ltd.

### 3. Measurement of Pore Diameter

The pore diameter of the porous membrane was determined by the t-plot method of nitrogen adsorption measurement.

### 4. Measurement of Specific Surface Area

The specific surface area of the porous membrane was determined by the Brunauer-Emmett-Teller method (BET method) of nitrogen adsorption measurement.

### 5. Permeability

### (1) Carbon Monoxide Permeability

As gas-permeable cells, a first chamber and a second chamber, each of which had been formed out of an acrylic plate with a thickness of 5 mm and had an inner diameter of 50 mm and a length of 100 mm, were provided. The opening of each chamber had a rim, and a sample could be fixed between the openings of the two chambers with a gasket attached to the rim. The sample was formed by bonding two pieces of aluminum tape with a circular hole having a diameter of 16 mm together with the gas filter sandwiched between the two pieces of aluminum tape. In this manner, the carbon monoxide permeation area of the gas filter was defined at 2 cm². A carbon monoxide gas cylinder was connected to the first chamber, and a carbon monoxide gas sensor NAP-508 manufactured by Nemoto Sensor Engineering Co., Ltd. was loaded into the second chamber so that the carbon monoxide concentration in the second chamber might be detected at an interval of 1 second. In this state, the sample was fixed between the two chambers. A carbon monoxide gas was introduced into the first chamber from the carbon monoxide gas cylinder so that the first chamber had a carbon monoxide concentration of 150 ppm, and a variation in carbon monoxide concentration in the second chamber was measured with the carbon monoxide gas sensor. A carbon monoxide gas permeability coefficient (unit: mmol/cm²·h·Pa) was calculated based on the results of measurement obtained by the carbon monoxide gas sensor until 1 minute passed since the carbon monoxide gas was introduced.

### (2) Water Vapor Permeability

A cup with an inner diameter of 56 mm and a height of 32 mm, which had been formed out of a stainless-steel plate with a thickness of 1 mm, was provided. The opening of the cup had a rim, to which a gasket and a pressing lid were attached so that the sample could be fixed. The sample was formed by bonding two pieces of aluminum tape with a circular hole having a diameter of 16 mm together with the gas filter sandwiched between the two pieces of aluminum tape. In this manner, the water vapor permeation area of the gas filter was defined at 2 cm². A plastic dish containing 10 g of calcium chloride was put into the cup, the sample was fixed to the cup, and then the initial weight of the cup was measured in this state. The cup was loaded into a constant temperature and humidity chamber, of which the temperature and humidity were set at 25°C and 90%, respectively. After 24 hours, the cup was unloaded, and the weight of the cup was measured again. Based on the result, the water vapor permeability coefficient (unit: mmol/cm²·h·Pa) was calculated.

### (3) Evaluation

As for Example 2, Example 7, and Comparative Example 1, the carbon monoxide permeability and water vapor permeability were measured, and the ratio of the water vapor permeability coefficient to the carbon monoxide gas permeability coefficient (H₂O permeability coefficient/CO permeability coefficient) was calculated based on the results. The results are shown in Tables 1 and 2. Evaluation may be made that the smaller the ratio is, the more significantly the gas filter would block the permeation of water vapor.

In Examples 2 and 7, the ratio was small enough to make evaluation that the gas filter sufficiently blocked the permeation of water vapor. It may be inferred that the gas filter would sufficiently block the permeation of water vapor in not only Examples 2 and 6 but also the other examples as well. On the other hand, in Comparative Example 1, the ratio was larger than in Examples 2 and 7. Therefore, it may be determined that the gas filter would block the permeation of water vapor less sufficiently in Comparative Example 1 than in the examples.

**[Table 1]**

| | | | Examples | | | | |
|---|---|---|---|---|---|---|---|
| | | | 1 | 2 | 3 | 4 | 5 |
| Composition of reactive solution | Tetraethoxysilane | mL | 0.430 | 0.421 | 0.399 | 0.355 | 0.439 |
| | | mmol | (1.94) | (1.90) | (1.80) | (1.60) | (1.98) |
| | Trimethoxy(3,3,3-trifluoropropyl)silane | mL | 0.012 | 0.020 | 0.038 | 0.077 | |
| | | mmol | (0.06) | (0.10) | (0.20) | (0.40) | |
| | | mol% | (3) | (5) | (10) | (20) | |
| | Trimethoxy(1H,1H,2H,2H-nonafluorohexyl)silane | mL | | | | | 0.007 |
| | | mmol | | | | | (0.02) |
| | | mol% | | | | | (1) |
| | Aqueous solution of hydrochloric acid with concentration of 1 mol/L | mL | 1.0 | 1.0 | 1.0 | 1.0 | 1.0 |
| | | mmol | (0.1) | (0.1) | (0.1) | (0.1) | (0.1) |
| | Ion-exchanged water | mL | 1.16 | 1.16 | 1.16 | 1.16 | 1.16 |
| | Ethanol | mL | 7.308 | 7.317 | 7.341 | 7.389 | 7.391 |
| Adhesion amount | | mg/cm² | 0.5 | 0.5 | 0.5 | 0.5 | 0.5 |
| Water contact angle | | degrees | 69.4 | 70 | 75.3 | 74.2 | 94.8 |
| Pore diameter | | nm | 0.73 | 0.84 | 1.18 | 0.75 | 0.63 |
| Specific surface area | | m²/g | 327 | 255 | 750 | 105 | 380 |
| Ratio of H₂O permeability coefficient to CO permeability coefficient | | - | | 0.185 | | | |

**[Table 2]**

| | | | Examples | | | Comparative example |
|---|---|---|---|---|---|---|
| | | | 6 | 7 | 8 | 1 |
| Composition of reactive solution | Tetraethoxysilane | mL | 0.430 | 0.421 | 0.399 | 0.443 |
| | | mmol | (1.94) | (1.90) | (1.80) | 2 |
| | Trimethoxy(3,3,3-trifluoropropyl)silane | mL | | | | |
| | | mmol | | | | |
| | | mol% | | | | |
| | Trimethoxy(1H,1H,2H,2H-nonafluorohexyl)silane | mL | 0.021 | 0.034 | 0.068 | |
| | | mmol | (0.06) | (0.10) | (0.20) | |
| | | mol% | (3) | (5) | (10) | |
| | Aqueous solution of hydrochloric acid with concentration of 1 mol/L | mL | 1.0 | 1.0 | 1.0 | 1.0 |
| | | mmol | (0.1) | (0.1) | (0.1) | (0.1) |
| | Ion-exchanged water | mL | 1.16 | 1.16 | 1.16 | 1.16 |
| | Ethanol | mL | 7.585 | 7.780 | 8.266 | 7.317 |
| Adhesion amount | | mg/cm² | 0.5 | 0.5 | 0.5 | 0.5 |
| Water contact angle | | degrees | 107.3 | 107.9 | 112.5 | 54.6 |
| Pore diameter | | nm | 0.72 | 0.84 | 0.83 | 0.66 |
| Specific surface area | | m²/g | 298 | 215 | 217 | 363 |
| Ratio of H₂O permeability coefficient to CO permeability coefficient | | - | | 0.179 | | 0.260 |

### [Aspects]

A gas filter (1) according to a first aspect includes a porous membrane (2). The porous membrane (2) has a pore diameter equal to or smaller than 2 nm. The porous membrane (2) contains a polysiloxane compound having a fluoroalkyl group.

According to this aspect, the gas filter (1) may efficiently block the passage of water vapor.

In a second aspect, which may be implemented in conjunction with the first aspect, the gas filter (1) further includes a porous substrate (3). The pore diameter of the porous substrate (3) is larger than the pore diameter of the porous membrane (2). The porous substrate (3) and the porous membrane (2) are stacked.

According to this aspect, the porous membrane (2) is supported by the porous substrate (3), which may not only reduce the chances of causing damage, such as cracks, to the porous membrane (2) more effectively but also ensure sufficient permeation of the gas through the gas filter (1).

In a third aspect, which may be implemented in conjunction with the second aspect, the gas filter (1) further includes a porous intermediate layer (4) interposed between the porous substrate (3) and the porous membrane (2). The pore diameter of the porous intermediate layer (4) is smaller than the pore diameter of the porous substrate (3) and larger than the pore diameter of the porous membrane (2).

This aspect ensures more sufficient permeation of the gas through the gas filter (1).

In a fourth aspect, which may be implemented in conjunction with any one of the first to third aspects, the gas filter (1) is for use in a gas sensor (8).

According to this aspect, the gas filter (1) may effectively reduce the circulation of water vapor through the gas sensor (8).

A gas sensor (8) according to a fifth aspect includes: a gas sensing unit (5) which causes a change in response to components in a gas; and the gas filter (1) according to any one of the first to fourth aspects, through which the gas to be supplied to the gas sensing unit (5) passes.

According to this aspect, the gas filter (1) may effectively reduce the circulation of water vapor through the gas sensor (8).

A gas detection device (11) according to a sixth aspect includes: the gas sensor (8) according to the fifth aspect; and a detection unit (9) which generates a detection result of the gas in response to the change caused in the gas sensing unit (5) of the gas sensor (8).

### Reference Signs List

- 1: Gas Filter
- 2: Porous Membrane
- 3: Porous Substrate
- 4: Porous Intermediate Layer
- 5: Gas Sensing Unit
- 8: Gas Sensor
- 11: Gas Detection Device

## Claims

1. A gas filter comprising
a porous membrane,
the porous membrane having a pore diameter equal to or smaller than 2 nm, and
the porous membrane containing a polysiloxane compound having a fluoroalkyl group.

2. The gas filter of claim 1, further comprising a porous substrate, wherein
a pore diameter of the porous substrate is larger than the pore diameter of the porous membrane, and
the porous substrate and the porous membrane are stacked.

3. The gas filter of claim 2, further comprising a porous intermediate layer interposed between the porous substrate and the porous membrane, wherein
a pore diameter of the porous intermediate layer is smaller than the pore diameter of the porous substrate and larger than the pore diameter of the porous membrane.

4. The gas filter of any one of claims 1 to 3, wherein
the gas filter is for use in a gas sensor.

5. A gas sensor comprising:
a gas sensing unit configured to cause a change in response to components in a gas; and
the gas filter of any one of claims 1 to 4, through which the gas to be supplied to the gas sensing unit passes.

6. A gas detection device comprising:
the gas sensor of claim 5; and
a detection unit configured to generate a detection result of the gas in response to the change caused in the gas sensing unit of the gas sensor.
